# EUROPÄISCHE PATENTANMELDUNG

(11) **EP 2 289 358 A2**
(43) Veröffentlichungstag der Anmeldung: **02.03.2011**
(21) Anmeldenummer: 10008564.6
(22) Anmeldetag: 17.08.2010
(51) Int. Cl.: A41C 3/14, A41H 43/04, A41B 17/00, B32B 7/12, B32B 7/02, B29C 65/48, B29C 65/52

(54) **Stoffzuschnitt für ein Kleidungsstück, insbesondere Unterwäschestück**

(30) Priorität: 21.08.2009 DE 202009011419 U
(71) Anmelder: Triumph Intertrade AG, 5330 Bad Zurzach (CH)
(72) Erfinder: Tung, Kin Kwon, KLN, Hong Kong (CN); Wong, Tak Ming, Fanling, NT Hong Kong (CN)
(74) Vertreter: Patentanwälte Bitterich, Dr. Keller, Schwertfeger

(57) **Zusammenfassung**

Die Erfindung betrifft einen Stoffzuschnitt (8) für ein Kleidungsstück mit einem Oberstoff (2), der in einem Verstärkungsbereich (3) mit einem Unterstoff (4) verbunden ist, wobei die Verbindung durch eine zwischen Oberstoff (2) und Unterstoff (4) angeordnete Kleberschicht (5a, 5b, 5c) gebildet ist. In diesem Verstärkungsbereich (3) weist der Stoffzuschnitt (8) zumindest zwei Flächenabschnitte (6a, 6b, 6c) auf, die unterschiedliche Elastizitätsmoduln besitzen. Gemäß der Erfindung wird vorgeschlagen, dass im Flächenabschnitt (6a, 6b, 6c) mit höherem Elastizitätsmodul das Flächengewicht der Kleberschicht (5a, 5b, 5c) höher ist als im Flächenabschnitt (6a, 6b, 6c) mit niedrigerem Elastizitätsmodul. Die Erfindung betrifft ferner ein Kleidungsstück, das aus einem solchen Stoffzuschnitt (8) hergestellt ist.

## Beschreibung

Die vorliegende Erfindung betrifft einen Stoffzuschnitt für ein Kleidungsstück nach dem Oberbegriff des Schutzanspruchs 1 sowie ein Kleidungsstück nach Schutzanspruch 18, insbesondere ein Unterwäschestück mit einem solchen Stoffzuschnitt.

Kleidungsstücke werden üblicherweise aus mehreren Einzelteilen zusammengenäht. Diese Einzelteile werden in der industriellen Kleidungsfertigung mittels programmgesteuerter Schneideinrichtungen aus Stofflagen oder Stoffbahnen nach vorgegebenen Schnittmustern ausgeschnitten.

Diese Einzelteile oder auch Schnittteile, welche im Folgenden als Stoffzuschnitte bezeichnet sind, können ggf. mit eingearbeiteten Verstärkungen versehen sein, indem bereits die auszuschneidende Stofflage solche Verstärkungszonen aufweist oder indem das ausgeschnittene Einzelteil nachträglich mit Verstärkungselementen versehen wird. Die Wirkung solcher Verstärkungen besteht darin, dass in unterschiedlichen Bereichen des Stoffzuschnitts und somit in unterschiedlichen Bereichen des daraus konfektionierten Kleidungsstücks unterschiedliche Nachgiebigkeiten und Verformungsfähigkeiten des Stoff materials geschaffen werden, die aus verschiedenen Gründen von den Bekleidungsherstellern erwünscht sind.

Einer der wichtigsten Gründe hierfür ist, dass mit Hilfe von Kleidungsstücken Körperpartien durch Hervorheben ihrer Stärken und Kaschieren ihrer Schwächen vorteilhaft geformt werden sollen. Um diese Formgebungsfunktion während des Tragens zu erfüllen, ist das Kleidungsstück im Bereich der "kritischen" Körperpartien hier mit einer geringeren Nachgiebigkeit und demzufolge mit einer höheren Steifigkeit ausgebildet, um den Rundungen dieser Körperpartien Widerstand zu leisten um sie in eine optisch attraktive Form zu bringen. Andererseits sollen solche Kleidungsstücke trotz ihrer formunterstützenden Wirkung den Tragekomfort nicht einschränken, weshalb heute meist rein textile Lösungen, also ohne Verwendung gerade aus dem Büstenhalterbereich bekannter nichttextiler Einlagen wie Drahteinlagen, bevorzugt werden.

Um die entgegengesetzten Anforderungen der Formgebungsfunktion und des Tragekomforts optimal einhalten zu können, wird heute von Bekleidungstechnikern und Designern angestrebt, die durch die Größe des Elastizitätsmoduls ausgedrückte Nachgiebigkeit (Elastizität) der verarbeiteten Stoffzuschnitte über mehrere Abstufungen auch innerhalb des Flächenverlaufs des Stoffzuschnitts variieren zu können. So kann beispielsweise an eine Formgebungszone mit hoher Steifigkeit und geringer Nachgiebigkeit des Stoffzuschnitts eine Übergangszone mit mittlerer Nachgiebigkeit anschließen, die wiederum in eine sehr biegsame und nachgiebige Endzone mündet, welche lediglich eine drapierende Eigenschaft hat, d.h. diese Endzone soll nur in weicher Weise am Körper anliegen, ohne diesen in Form zu halten.

Zur Variation der Elastizitätseigenschaften der Stoffzuschnitte bedient man sich in der Bekleidungsindustrie der Tatsache, dass eine Vielzahl an Textilmaterialien zur Verfügung steht, deren physikalisch-mechanische Eigenschaften, u.a. auch deren Elastizitätsmoduln, genau dokumentiert sind. Aus diesem großen Pool bekannter Textilmaterialien kann der Bekleidungstechniker schöpfen, wenn er auf der der Trägerin zugewandten, unsichtbaren Innenseite eines Oberstoffs eine oder mehrere Lagen von dementsprechend ausgewählten Unterstoffen anbringen lässt, um die Elastizitätseigenschaften des Stoffzuschnitts im gewünschten Bereich einzustellen.

Ein großer Nachteil solcher Materialkombinationen ist aber, dass innerhalb des mit einem zusätzlichen Unterstoff verstärkten Flächenabschnitts des Stoffzuschnitts nur ein einziger konstanter, im Vergleich zum unverstärkten Oberstoff erhöhter, Elastizitätsmodul bereitgestellt wird. Will man aber die Elastizität entlang des Stoffzuschnitts über mehrere Abstufungen variieren, so bleibt nichts anderes übrig, als je nach gewünschter Elastizität eine oder mehrere Lagen des gewählten Unterstoffs auf den Oberstoff aufzubringen oder in verschiedenen Verstärkungsbereichen verschiedene textile Materialien mit sich voneinander unterscheidenden Elastizitätsmoduln als Unterstoff zu verwenden.

Die erste Variante schränkt durch die Dickenzunahme und die unebene Innenfläche im Kantenbereich der aufgebrachten Unterstofflagen den Tragekomfort erheblich ein und hat zudem den optischen Nachteil, dass sich die Unterstofflagen bei dünnen Oberstoffen nach außen durchdrücken können. Die zweite Variante treibt die Herstellungskosten auf dem ohnehin hart umkämpften Markt der Bekleidungsbranche in die Höhe, da die Paarung von verschiedenen Textilmaterialien einerseits die Materialvorhalte- und Materialbeschaffungskosten erhöht und andererseits je nach Anzahl gewünschter Elastizitätsabstufungen mehrere Unterstoffteile auf dem Oberstoff angebracht, meist aufgenäht werden müssen, was sich in höheren Fertigungskosten niederschlägt.

Der Erfindung liegt daher die Aufgabe zugrunde, einen Stoffzuschnitt für ein Kleidungsstück zu schaffen, der in verschiedenen Flächenabschnitten unterschiedliche elastische Eigenschaften aufweist, dabei jedoch einfach und billig in der Herstellung und angenehm im Tragekomfort ist.

Zur Lösung dieser Aufgabe ist bei dem erfindungsgemäßen Stoffzuschnitt, der in einem Verstärkungsbereich aus einem Oberstoff und einem flächig darauf aufgeklebten Unterstoff besteht, vorgesehen, dass das Flächengewicht der die Verbindung zwischen Oberstoff und Unterstoff herstellenden Kleberschicht in zumindest zwei Flächenabschnitten des Verstärkungsbereichs unterschiedlich ist. In dem Flächenabschnitt mit dem höheren Flächengewicht der Kleberschicht wird die Elastizität des Stoffverbunds aus Oberstoff und Unterstoff geringer sein als in dem Flächenabschnitt, wo das Flächengewicht der Kleberschicht niedriger ist.

Die Elastizität des hier vorliegenden Stoffverbunds wird durch den Elastizitätsmodul beschrieben, wobei dieser Elastizitätsmodul in umgekehrt proportionalem Verhältnis zur Elastizität steht, d.h. je elastischer und somit dehnbarer der Stoffverbund wird, desto niedriger liegt sein Elastizitätsmodul. Demzufolge wird der Elastizitätsmodul des Stoffverbunds in den Flächenabschnitten des Verstärkungsbereichs höher sein, in denen im Vergleich zu anderen Flächenabschnitten mehr Kleber aufgetragen worden ist, also in denen das Kleber-Flächengewicht höher ist.

Oberstoff und Unterstoff des verstärkten Stoffzuschnitts bestehen vorzugsweise jeweils aus Stretch-Gewebe, also aus Gewebe, in welches elastische Fasern eingewebt sind. Solche Stretch-Gewebe werden insbesondere für Stoffzuschnitte verwendet, die zu Unterwäschestücken wie Miederhosen, Miederbodies, Slips, Panties, Büstenhaltern oder dergleichen verarbeitet werden, da sich diese Materialien durch ihre hohe Eigenelastizität (niedrige Elastizitätsmoduln) perfekt an jede Körperform anpassen und dabei dennoch leicht und angenehm zu tragen sind. Wegen der im Vergleich zu den Stretch-Geweben geringeren Eigenelastizität der Kleberschicht besteht die erstmals durch die vorliegende Erfindung erkannte Möglichkeit darin, in dem, Verstärkungsbereich des Stoff zuschnitts die Kleberschicht in ihrer Auftragsmenge so zu variieren, dass die Dehnungsfähigkeit der elastischen Fasern in den Nachbargeweben unterschiedlich weit eingeschränkt wird, so dass hierdurch wiederum die Unterteilung des Verstärkungsbereichs in unterschiedlich "steife" Unterbereiche bewirkt wird.

Bevorzugte Ausführungsformen der vorliegenden Erfindung beziehen sich insbesondere auf die unterschiedlichen Gestaltungsmöglichkeiten der Kleberschicht zwecks abschnittsweiser Variation ihres Flächengewichts. Eine fertigungstechnisch besonders einfache Ausführungsform sieht hierzu vor, das Flächengewicht in Abhängigkeit der Dicke der Kleberschicht einzustellen. Eine weitere Ausführungsform sieht erfindungsgemäß vor, für verschiedene Flächenabschnitte des Verstärkungsbereichs auch verschiedenartige Klebemittel einzusetzen, welche sich insbesondere in ihrer Dichte unterscheiden. Durch eine solche Lösung könnten die verwendete Technologie und die voreingestellten Parameter für Klebemittelauftrag und -aushärtung konstant gewählt sein, und lediglich das eingesetzte Klebemittel müsste ausgetauscht werden.

Eine besonders bevorzugte Ausführungsform der vorliegenden Erfindung sieht aber vor, durch flächenabschnittsweise Variation des Kleberauftragsbildes bei einheitlichem Klebemittel die gewünschte Abstufung der Flächengewichte in der Kleberschicht bereitzustellen. Unter dem Begriff Auftragsbild wird im Folgenden die zweidimensionale Struktur verstanden, in welcher die Kleberschicht zwischen Ober- und Unterstoff angeordnet ist, wobei sich diese Struktur durch Änderung der Auftragsparameter leicht variieren lässt, z.B. indem bei Sprühverfahren die aus der Sprühdüse austretenden Kleberfäden unterschiedlich auf das Substrat (hier den Oberstoff oder den Unterstoff) abgelegt werden. Entscheidend für die Höhe des Elastizitätsmoduls ist aber auch bei dieser Lösung das Flächengewicht der Kleberschicht, welches wiederum durch den Flächenbedeckungsgrad des eingestellten Auftragsbildes bestimmt ist. Je niedriger dieser Flächenbedeckungsgrad ist, d.h. je mehr freie unbeschichtete Zwischenräume in der Kleberschicht vorhanden sind, desto niedriger ist das Flächengewicht der Kleberschicht und somit desto niedriger auch der Elastizitätsmodul des kleberbeschichteten Flächenabschnitts im Verstärkungsbereich des Stoffzuschnitts. Wird der Kleber z.B. vollflächig als geschlossener Klebefilm aufgetragen, ist die Elastizität und Dehnbarkeit in diesem Flächenabschnitt deutlich niedriger, als wenn der Kleber nur punktförmig aufgetragen worden wäre. Um in einzelnen Flächenabschnitten des Verstärkungsbereichs Elastizitätsverluste ganz zu vermeiden, kann dort komplett auf eine Kleberzwischenschicht verzichtet werden, so dass Oberstoff und Unterstoff in solchen Flächenabschnitten lose aufeinander liegen und sich diese beiden Stofflagen im Tragezustand frei ausdehnen können, ohne dass ihre Elastizität hierbei durch die geringere Dehnfähigkeit der Kleberschicht eingeschränkt wird.

In einer weiteren vorteilhaften Ausgestaltung der Erfindung sind die Elastizitätsmoduln in den mit unterschiedlichen Kleber-Flächengewichten beschichteten Flächenabschnitten des

Verstärkungsbereichs nicht jeweils homogen, sondern weisen unterschiedliche Werte auf je nachdem, ob die Beanspruchung in Längs- oder in Querrichtung erfolgt. Diese richtungsabhängige Elastizität ist einfach dadurch erzeugbar, dass die elastischen Fasern im Stretch-Gewebe des Ober- und Unterstoffs vorzugsweise in Längs- oder Querrichtung orientiert sind, was insbesondere bei am Körper anliegenden Unterwäschestücken von Vorteil ist, da hier vor allem in Querrichtung zur Anpassung an unterschiedliche Körperformen eine höhere Elastizität als in Längsrichtung erwünscht ist. Diese Unterschiede zwischen der Elastizität in Quer- und in Längsrichtung des Stoffzuschnitts können im Verstärkungsbereich nach einer weiteren bevorzugten Ausführungsform der Erfindung je nach eingestelltem Auftragsbild der Kleberschicht, insbesondere je nach Haupterstreckungsrichtung der einzelnen aufgebrachten Kleberfäden, vergrößert oder verringert werden.

Die nachfolgende, im Hinblick auf die beiliegenden Zeichnungen erstellte Beschreibung einer aus dem Stand der Technik bekannten Ausführungsform und verschiedener erfindungsgemäßer Ausführungsformen dient der weiteren Erläuterung der vorliegenden Erfindung. Diese Beschreibung versteht sich nur als veranschaulichend und nicht als einschränkend für den Schutzumfang der Erfindung.

Es zeigt
- Fig. 1: einen aus dem Stand der Technik bekannten Stoffzuschnitt für eine Miederhose mit unterschiedlich verstärkten flächigen Zonen,
- Fig. 2: einen Schnitt längs der Linie II - II aus Fig.1 durch den Verstärkungsbereich des Stoffzuschnitts,
- Fig. 3: einen erfindungsgemäßen Stoffzuschnitt für eine Miederhose mit unterschiedlich verstärkten flächigen Zonen,
- Fig. 4: einen Schnitt längs der Linie IV - IV aus Fig. 3 durch den Verstärkungsbereich des Stoffzuschnitts in einer ersten Ausführungsvariante der Erfindung,
- Fig. 5: einen Schnitt längs der Linie IV - IV aus Fig. 3 durch den Verstärkungsbereich des Stoffzuschnitts in einer zweiten Ausführungsvariante der Erfindung,
- Fig. 6: einen erfindungsgemäßen Stoffzuschnitt für eine Miederhose nach einer dritten Ausführungsvariante mit entfernter Unterstoffabdeckung zur Freigabe des Blicks auf die Kleberschicht,
- Fig. 7: einen Schnitt längs der Linie VII - VII aus Fig. 6 durch den Verstärkungsbereich des Stoffzuschnitts.

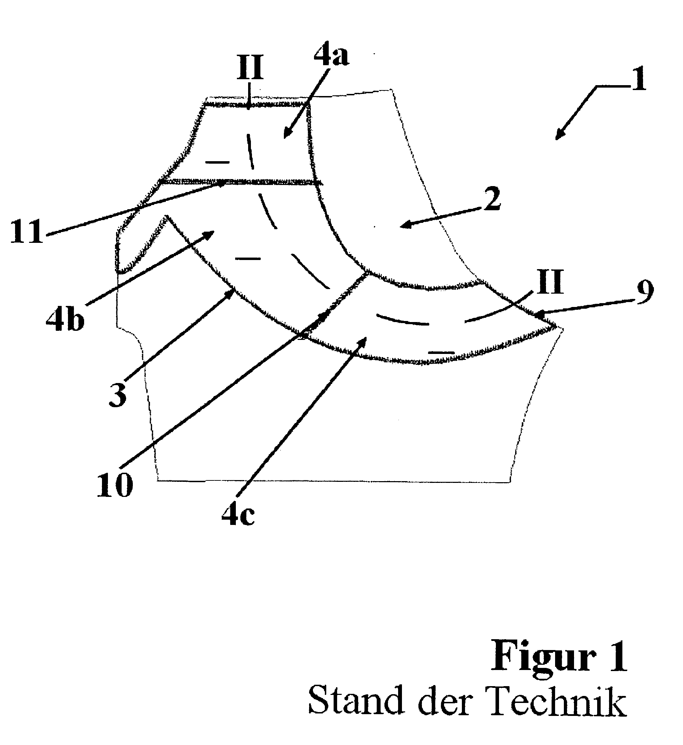

Fig. 1 zeigt einen aus dem Stand der Technik bekannten Stoffzuschnitt 1, bestehend aus einem Oberstoff 2, der in einem flächig zusammenhängenden Verstärkungsbereich 3 mit mehreren Unterstofflagen 4a, 4b, 4c beschichtet ist. Der Stoffzuschnitt 1 gemäß dem in Fig. 1 dargestellten Ausführungsbeispiel lässt sich mit einem dazu spiegelverkehrt geschnittenen und verstärkten Stoffzuschnitt und weiteren dekorativen Stoffteilen im zentralen Verbindungsbereich der beiden Stoffzuschnitte zu einer Miederhose zusammennähen, wobei der Oberstoff 2 die der Trägerin abgewandte Außenseite der Miederhose bildet, während der Verstärkungsbereich 3 mit den aufgebrachten Unterstofflagen 4a, 4b, 4c innenseitig und unsichtbar an der Haut der Trägerin anliegt.

Der Oberstoff 2 und die Unterstofflagen 4a, 4b, 4c sind dabei vorzugsweise jeweils aus Stretch-Gewebe mit elastischen Faseranteilen hergestellt, so dass sich die Miederhose eng an den Körper der Trägerin anschmiegt, ohne dass sich das Unterwäschestück durch die Oberbekleidung nach außen durchdrückt. Eine Miederhose soll sich aber keineswegs nur durch ihre Eigenelastizität an jede Kontur des Körpers "passiv" anlegen, sondern soll darüber hinaus als figurformendes Kleidungsstück "kritische" Körperpartien wie insbesondere Bauch, Gesäß und Hüfte "aktiv" flachdrücken, d.h. die Miederhose soll hier formgebend für die entsprechende Körperpartie wirken und so zu einer schlankeren und gleichmäßigeren Silhouette beitragen.

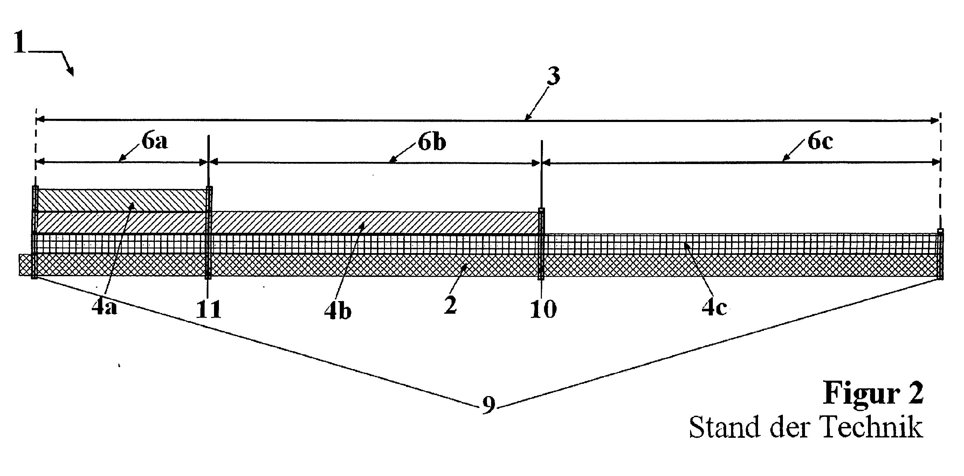

Zu diesem Zweck benötigen die Stoffzuschnitte 1 zur Herstellung solcher Miederhosen in einem Verstärkungsbereich 3 eine größere Formkraft bzw. Festigkeit, d.h. die Elastizität des als Oberstoff 2 fungierenden Stretch-Gewebes muss in diesem Verstärkungsbereich 3 reduziert werden. Diese Reduktion der Elastizität soll wie im Fig. 1 dargestellten Ausführungsbeispiel möglichst mehrstufig erfolgen, so dass der Verstärkungsbereich 3 wiederum in Flächenabschnitte 6a, 6b, 6c niedriger, mittlerer und hoher Elastizität unterteilt wird. Durch diese vorteilhafte Elastizitätsabstufung ist es möglich, die auf den Körper der Trägerin wirkenden Formgebungskräfte besser zu kontrollieren und gezielter einzusetzen, so dass bessere Formgebungsresultate bei gestiegenem Tragekomfort erzielt werden können. Fig. 2 zeigt in einer Schnittansicht entlang der Linie II - II aus Fig. 1, wie diese unterschiedlichen Elastizitäten im Verstärkungsbereich 3 bei bisher aus dem Stand der Technik bekannten Stoffzuschnitten 1 erreicht werden. Der Oberstoff 2 wird zur Bereitstellung eines Verstärkungsbereichs 3 im Stoffzuschnitt 1, welcher wiederum drei voneinander abgegrenzte Flächenabschnitte 6a, 6b, 6c unterschiedlicher Elastizität umfasst, mit genau so vielen, also drei Unterstofflagen 4a, 4b, 4c übernäht. Diese drei Unterstofflagen 4a, 4b, 4c sind in ihrer Flächengröße unterschiedlich groß gestaltet. Die unmittelbar auf dem Oberstoff 2 aufliegende erste Unterstofflage 4c besitzt die größte Flächengröße der drei Unterstofflagen 4a, 4b, 4c. Diese erste Unterstofflage 4c ist an ihren Außenrändern über durchgehende Nähte 9 mit dem Oberstoff 2 verbunden und gibt durch ihre Lage und Größe die Lage und Größe des Verstärkungsbereichs 3 im Stoffzuschnitt 1 vor.

Auf die erste Unterstofflage 4c ist zur weiteren abschnittsweisen Verstärkung wiederum eine zweite Unterstofflage 4b aufgenäht, die in ihrer Kontur und Größe an die Kontur und Größe der ersten Unterstofflage 4c in der Weise angepasst ist, dass die Außenränder der zweiten Unterstofflage 4b weitestgehend genau über den Außenrändern der ersten Unterstofflage 4c zu liegen kommen. Lediglich ein Außenrand 10 der zweiten Unterstofflage 4b ist durch die im Vergleich zur ersten Unterstofflage 4c geringere Größe der zweiten Unterstofflage 4b zwangsläufig nicht deckungsgleich mit dem Außenrand der darunter liegenden ersten Unterstofflage 4c. Dieser Außenrand 10 liegt innerhalb der von der ersten Unterstofflage 4c gebildeten Fläche des Verstärkungsbereichs 3 und bildet die Grenze zwischen dem Flächenabschnitt 6c des Verstärkungsbereichs 3, in dem nur eine Unterstofflage 4c auf dem Oberstoff 2 aufgenäht ist und dem Flächenabschnitt 6b, in dem zwei Unterstofflagen 4b, 4c auf dem Oberstoff 2 aufgenäht sind. Die zweite Unterstofflage 4b ist an ihren Außenrändern ebenfalls über Nähte mit der ersten Unterstofflage 4c und dem Oberstoff 2 verbunden.

Auf die zweite Unterstofflage 4b ist zur Schaffung eines zusätzlichen Flächenabschnitts 6a im Verstärkungsbereich 3 mit anderer Dehnungseigenschaft wiederum eine dritte Unterstofflage 4a aufgenäht, deren Außenränder sich weitestgehend mit den Außenrändern der ersten und zweiten Unterstofflage 4c, 4b überdecken, wobei diese dritte Unterstofflage 4a gemäß Schnittansicht aus Fig. 2 bündig am linken Randbereich der zweiten und damit auch der ersten Unterstofflage 4b, 4c aufgenäht ist. Da diese abschließende dritte Unterstofflage 4a die kleinste Flächengröße der drei Unterstofflagen 4a, 4b, 4c aufweist, ist aber ein Außenrand 11 wiederum zwangsläufig nicht deckungsgleich mit den Außenrändern der darunter liegenden Unterstofflagen 4b, 4c, sondern ist eingerückt innerhalb der von der zweiten Unterstofflage 4b bedeckten Fläche angeordnet, wobei dieser Außenrand 11 die Grenze bildet zwischen dem Flächenabschnitt 6b des Verstärkungsbereichs 3, in dem der Oberstoff 2 von zwei Unterstofflagen 4b, 4c bedeckt ist und dem Flächenabschnitt 6a, in dem der Oberstoff 2 von drei Unterstofflagen 4a, 4b, 4c bedeckt ist.

Durch die vorgeschilderte Aufeinanderschichtung mehrerer Stofflagen 4a, 4b, 4c ist es gelungen, den Verstärkungsbereich 3 in drei Flächenabschnitte 6a, 6b, 6c zu unterteilen, in denen sich die Anzahl der auf dem Oberstoff 2 aufliegenden Unterstofflagen 4a, 4b, 4c unterscheidet. Diese Flächenabschnitte 6a, 6b, 6c sind in der Schnittdarstellung der Fig. 2 besonders deutlich zu erkennen. Von rechts nach links folgt hier auf einen Flächenabschnitt 6c mit einer Unterstofflage 4c ein Flächenabschnitt 6b mit zwei Unterstofflagen 4b, 4c und ein Flächenabschnitt 6a mit drei Unterstofflagen 4a, 4b, 4c, deren Abgrenzung auch noch in der Draufsicht nach Fig. 1 durch die nicht deckungsgleiche Anordnung der Nahtverbindungen 9, 10, 11 der drei Unterstofflagen 4a, 4b, 4c erkennbar ist.

Eine Zunahme der Anzahl übereinander geschichteter Stofflagen geht einher mit einer Zunahme des Elastizitätsmoduls des entsprechenden Stoffverbunds, d.h. der Stoffverbund ist um so steifer bzw. unelastischer, je mehr Stofflagen dieser umfasst. Im in Fig. 2 rechts angeordneten Flächenabschnitt 6c weist der Verstärkungsbereich 3 des Stoffzuschnitts 1 also die höchste Elastizität auf, da hier nur eine Unterstofflage 4c aufgebracht ist, während der Verstärkungsbereich 3 des Stoffzuschnitts im in Fig. 2 links angeordneten Flächenabschnitt 6a die geringste Elastizität aufweist, da hier bereits drei Unterstofflagen 4a, 4b, 4c auf dem Oberstoff 2 aufgebracht sind. Eine solche Technik zur unterschiedlich abgestuften Verstärkung von Oberstoffen 2 für Bekleidungsstücke ist zwar schon lange bekannt und weit verbreitet, aber mit Nachteilen verbunden, die bereits aus der Schnittdarstellung gemäß Fig. 2 deutlich hervortreten. Der Stoffzuschnitt 1 muss in höher verstärkten Flächenabschnitten 6a, 6b, die aus mehreren übereinander liegenden Stofflagen 2, 4a, 4b, 4c bestehen, vergleichsweise dick und klobig dimensioniert sein. Diese großen Stoffdicken und die im Randbereich der Unterstofflagen 4a, 4b, 4c auftretenden Sprünge in den Dickenabmessungen wirken sich genau so wie die zur Verbindung der Stofflagen 2, 4a, 4b, 4c verwendeten Nähte 9, 10, 11 nachteilhaft auf den Tragekomfort aus, da insbesondere bei Unterwäschestücken sowohl die Unterstofflagen 4a, 4b, 4c als auch die Nähte 9, 10, 11 mit der Körperhaut der Trägerin in Kontakt stehen und hierdurch unangenehme Druckstellen ausgebildet werden können.

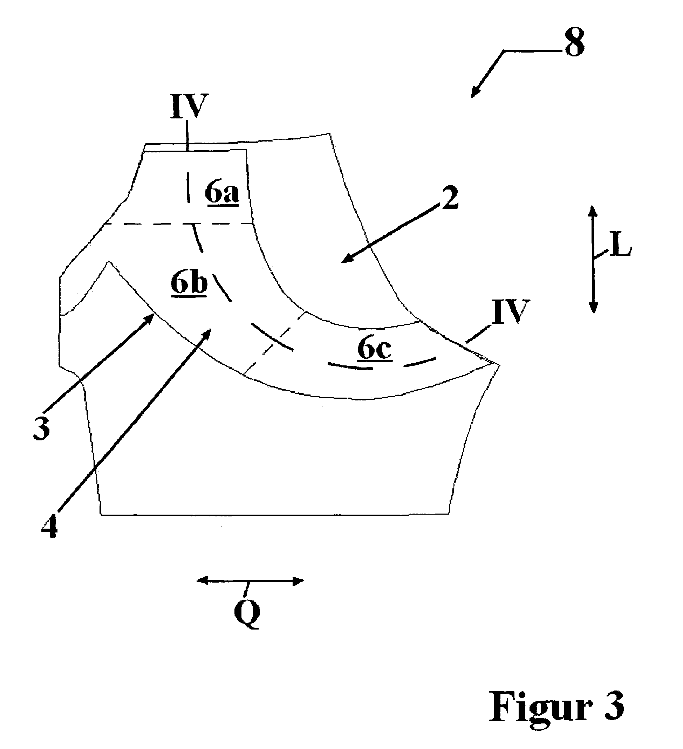

Im Zusammenhang mit den Fig. 3 bis 7 werden nachfolgend Ausführungsbeispiele eines erfindungsgemäßen Stoffzuschnitts 8 näher erläutert, mit welchen die vorgenannten Nachteile eines bekannten, in den Fig. 1 und 2 beispielhaft dargestellten Stoffzuschnitts 1 auf verblüffend einfache Weise überwunden werden können. Zur besseren Vergleichsmöglichkeit mit dem Stand der Technik nach Fig. 1 und 2 handelt es sich bei dem in Fig. 3 dargestellten erfindungsgemäßen Stoffzuschnitt 8 ebenfalls um einen Stoffzuschnitt 8 für eine Miederhose, der die gleichen Außenabmessungen wie der Stoffzuschnitt 1 aus Fig. 1 aufweist und ebenfalls mit weiteren Stoffzuschnitten zu einer fertigen Miederhose zusammennähbar ist.

Auch dieser Stoffzuschnitt 8 ist wie der Stoffzuschnitt 1 nach dem Stand der Technik gemäß Fig. 1 in einem gleich dimensionierten und positionierten Bereich 3 verstärkt, um eine Formgebungsfunktion bezüglich dem Körper der Trägerin ausüben zu können. Ebenfalls in Konformität mit Fig. 1 ist dieser Verstärkungsbereich 3 in drei Flächenabschnitte 6a, 6b, 6c mit unterschiedlichen Elastizitätseigenschaften unterteilt, um vorteilhafterweise die anliegenden Körperabschnitte der Trägerin gezielter zu formen, da beispielsweise der obere, an Gesäß und Hüfte anliegende Bereich 6a, 6b der Miederhose formstabiler sein sollte als der untere, am Oberschenkel anliegende Bereich 6c der Miederhose.

Schon aus der Gesamtansicht der Fig. 3 wird aber ein grundlegender Unterschied zum Stand der Technik nach Fig. 1 und 2 deutlich. Es treten nicht länger den Tragekomfort beeinträchtigende Nahtverbindungen durch die Stofflagen 2, 4 des Verstärkungsbereichs 3 hindurch. Diese Nahtverbindungen 9, 10, 11 haben in Fig. 1 noch deutlich sichtbar die Grenzen der drei Flächenabschnitte 6a, 6b, 6c mit unterschiedlichen Elastizitätseigenschaften markiert, während aus der Draufsicht der Fig. 3 die Abgrenzung dieser drei Flächenabschnitte 6a, 6b, 6c nicht erkennbar ist und nur hilfsweise durch gestrichelte Linien angedeutet wird.

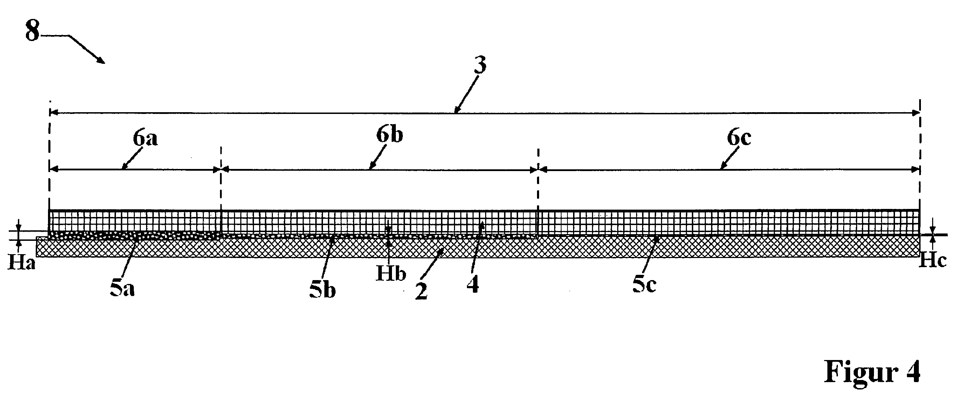

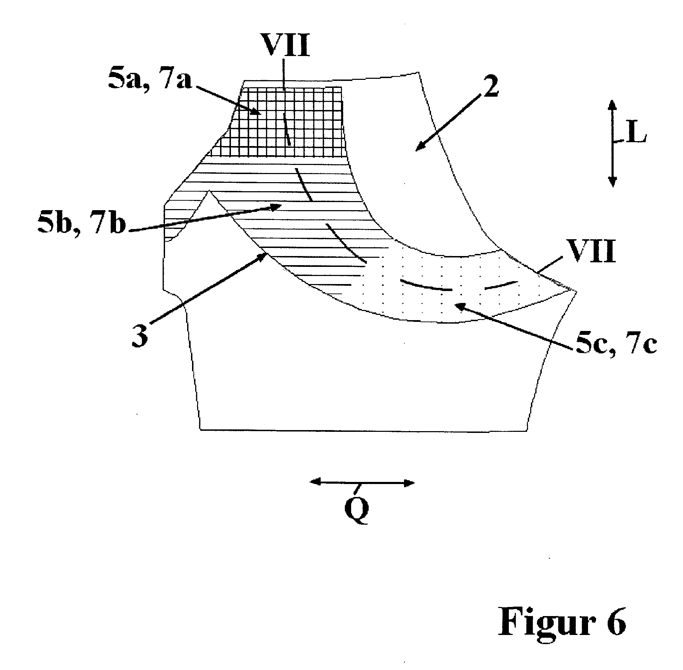

Erst aus den Schnittansichten durch den Verstärkungsbereich 3 gemäß den Fig. 4, 5 und 7 und der Ansicht mit entfernter Unterstoffabdeckung 4 gemäß Fig. 6 werden diese Übergangsgrenzen zwischen den Bereichen 6a, 6b, 6c unterschiedlicher Elastizität sichtbar. Der Grund dafür, dass die Flächenabschnitte 6a, 6b, 6c unterschiedlicher Elastizität von außen nicht mehr ohne Weiteres erkennbar sind, liegt darin, dass auf dem Oberstoff 2 im Verstärkungsbereich 3 nur noch ein einheitlich aufgebauter Unterstoff 4 aufgebracht ist. Dieser Unterstoff 4 kann wie der Oberstoff 2 ein ein- oder mehrlagiges Gewebe, vorzugsweise Stretch-Gewebe, sein und übt im Verstärkungsbereich 3 lediglich eine Hilfsfunktion zur Abstufung der Elastizitätseigenschaften aus.

Da der Unterstoff 4 über den gesamten Flächenabschnitt 6a + 6b + 6c des Verstärkungsbereichs 3 einheitlich ist, kann die Variation seines Aufbaus, beispielsweise durch ein- oder mehrlagige Ausführung gemäß den Fig. 1 und 2 oder durch unterschiedliche Materialkombinationen, nicht länger herangezogen werden, um die gewünschten Elastizitätsabstufungen zu erzielen. Die Vorteile im Vergleich zum uneinheitlichen mehrlagigen Unterstoffaufbau 4a, 4b, 4c (vgl. Stand der Technik gemäß Fig. 2) liegen aber bei der Verwendung eines einzigen einheitlichen Unterstoffs 4 in der einfacheren Herstellung und den geringeren Materialeinsatzkosten des Stoffzuschnitts 8.

Dieser einheitliche Unterstoff 4 ist, wie aus den Fig. 4 bis 7 ersichtlich ist, im Verstärkungsbereich 3 des erfindungsgemäßen Stoffzuschnitts 8 mit dem Oberstoff 2 verklebt. Dem Einsatz der Klebetechnik sind dank der rasanten Entwicklung wasch- und bügelfester Textilkleber heute in der Textilverarbeitung immer größer werdende Anwendungsbereiche eröffnet. Vorteilhaft ist dabei auch, dass solche Klebeverbindungen in der Textilindustrie durch Kombination mit bekannten Laminiertechnologien, wie beispielsweise durch Ultraschalllaminieren, schnell, einfach und billig herstellbar sind.

Der Kern der vorliegenden Erfindung beruht aber darin, die zwischen Oberstoff 2 und Unterstoff 4 angeordnete Kleberschicht 5a, 5b, 5c nicht nur als Verbindungsmittel, sondern auch als Mittel zur Steuerung der Elastizitätseigenschaften im Verstärkungsbereich 3 einzusetzen. Hierbei bedient man sich des Zusammenhangs zwischen Flächengewicht der aufgebrachten Kleberschicht 5a, 5b, 5c und dem Elastizitätsmodul des diese Kleberschicht 5a, 5b, 5c umfassenden Stoffverbunds. Je höher nämlich das Flächengewicht der Kleberschicht 5a, 5b, 5c bei gleichbleibendem Ober- und Unterstoff 2, 4 ist, desto höher ist auch der Elastizitätsmodul des aus Oberstoff 2, Kleberschicht 5a, 5b, 5c und Unterstoff 4 bestehenden Stoffverbunds im Verstärkungsbereich 3 des erfindungsgemäßen Stoffzuschnitts 8. Das Flächengewicht stellt die Menge an Kleber dar, die pro Flächeneinheit aufgetragen wird und wird im Regelfall in Gramm pro m² angegeben. Dabei wird im Folgenden davon ausgegangen, dass die Flächenabschnitte 6a, 6b, 6c mit unterschiedlichen Elastizitätseigenschaften unterschiedliche Kleber-Flächengewichte aufweisen, dass aber innerhalb dieser Flächenabschnitte 6a, 6b, 6c das Kleber-Flächengewicht jeweils konstant ist, die Kleberschicht 5a, 5b, 5c innerhalb dieser Flächenabschnitte 6a, 6b, 6c also jeweils homogen verteilt ist.

Im Tragezustand wird der Stoffzuschnitt 8 der Miederhose in Querrichtung Q und Längsrichtung L durch Dehnungskräfte belastet. Der Widerstand, welcher diesen Dehnungskräften entgegengesetzt wird, ist abhängig vom lokalen Elastizitätsmodul des Stoffzuschnitts 8, wobei der Betrag des Elastizitätsmoduls um so größer ist, je mehr Widerstand der entsprechende Bereich des Stoffzuschnitts 8 der Dehnungskraft entgegen setzt. Im Verstärkungsbereich 3 sind drei Materialschichten, nämlich Oberstoff 2, Kleberschicht 5a, 5b, 5c und Unterstoff 4 aufeinander gesetzt und somit teilt sich in Analogie zu einer Parallelschaltung die angreifende Dehnungskraft entsprechend den Elastizitäten dieser einzelnen Materialschichten auf die drei Materialschichten auf. Da sich der mehrschichtige Stoffverbund im Verstärkungsbereich 3 wesentlich weniger verformt als eine durch die angreifende Dehnungskraft belastete einzelne Materialschicht ist der Elastizitätsmodul im Verstärkungsbereich 3 demnach größer als der Elastizitätsmodul im umgebenden unverstärkten Oberstoffmaterial 2, wodurch der angestrebte Verstärkungseffekt allein schon durch das Überkleben mit dem Unterstoff 4 erreicht ist.

Allerdings ist nicht nur ein einziger, gleichmäßig verstärkter Bereich 3 erwünscht, sondern aus den eingangs genannten Gründen sollen auch innerhalb des Verstärkungsbereichs 3 nochmals Zonen 6a, 6b, 6c unterschiedlicher Elastizität geschaffen werden. Im Stand der Technik wird diese Elastizitätsabstufung entweder durch Verwendung unterschiedlicher Unterstoffmaterialien mit unterschiedlichen Elastizitäten oder gemäß Fig. 1 und 2 durch eine Zu- bzw. Abnahme der Anzahl an Unterstofflagen 4a, 4b, 4c erreicht, was beides herstellungstechnisch aufwändig und deshalb teuer ist.

In den verschiedenen Ausführungsformen des erfindungsgemäßen Stoffzuschnitts 8 nach den Fig. 4 bis 7 ist daher auf dem Oberstoff 2 jeweils ein einheitlich zusammengesetzter Unterstoff 4 aufgebracht und die Elastizitätsabstufung wird einfach durch Variation des Flächengewichts der zwischen Oberstoff 2 und Unterstoff 4 angeordneten Kleberschicht 5a, 5b, 5c erreicht. Bei einer Erhöhung des Flächengewichts der Kleberschicht 5a, 5b, 5c wird bei gleichbleibender äußerer Dehnungskraft eine geringere Verformung des Stoffzuschnitts 8 im entsprechenden Bereich 6a, 6b, 6c erzielt, weil die Kleberschicht 5a, 5b, 5c durch die Zunahme des Flächengewichts der Dehnungskraft einen größeren Widerstand entgegensetzt, d.h. der Elastizitätsmodul der Kleberschicht 5a, 5b, 5c nimmt mit dessen Flächengewicht zu. Da sich der gesamte Elastizitätsmodul eines Stoffverbunds bei einer Parallelschaltung, die hier wegen der für alle Materialschichten gleichen Deformation vorliegt, als arithmetisches Mittel der Einzelmoduln der jeweiligen Materialschichten ergibt, wirkt sich eine Erhöhung des Elastizitätsmoduls der Kleberschicht 5a, 5b, 5c in einer Erhöhung des Gesamtelastizitätsmoduls aus, d.h. der Stoffzuschnitt 8 wird mit zunehmendem Flächengewicht der Kleberschicht 5a, 5b, 5c insgesamt steifer. Das bedeutet, dass man über die Wahl des Flächengewichts der Kleberschicht 5a, 5b, 5c die elastischen Eigenschaften im Verstärkungsbereich 3 des Stoffzuschnitts 8 in einem weiten Bereich variieren kann.

Die Fig. 4 bis 7 zeigen Ausführungsbeispiele, wie eine solche Variation des Flächengewichts der Kleberschicht 5a, 5b, 5c zum Zwecke der Elastizitätsabstufung im Verstärkungsbereich 3 realisiert sein kann.

Gemäß der Schnittdarstellung aus Fig. 4 kann die Kleberschicht 5a, 5b, 5c in drei Flächenabschnitten 6a, 6b, 6c des Verstärkungsbereichs 3 mit jeweils unterschiedlichen Schichtdicken Ha, Hb, Hc aufgetragen worden sein. Im aus Sicht von Fig. 4 links angeordneten Flächenabschnitt 6a des Verstärkungsbereichs 3 weist die Kleberschicht 5a die größte Schichtdicke Ha auf, während die Kleberschicht 5c im rechts angeordneten Flächenabschnitt 6c die geringste Schichtdicke Hc aufweist. In einem zwischen diesen beiden äußeren Flächenabschnitten 6a, 6c angeordneten mittleren Flächenabschnitt 6b weist die Kleberschicht 5b eine Schichtdicke Hb auf, die zwischen den Schichtdicken Ha, Hc der beiden äußeren Flächenabschnitte 6a, 6c liegt. Somit nimmt das Flächengewicht der Kleberschicht 5a, 5b, 5c in den drei Flächenabschnitten 6a, 6b, 6c aus Sicht von Fig. 4 von links nach rechts in drei Stufen ab, wobei im linken Flächenabschnitt 6a der Elastizitätsmodul am höchsten, d.h. der Stoffverbund am steifsten ist, während im rechten Flächenabschnitt 6c der Elastizitätsmodul am niedrigsten, d.h. der Stoffverbund am nachgiebigsten bzw. elastischsten ist.

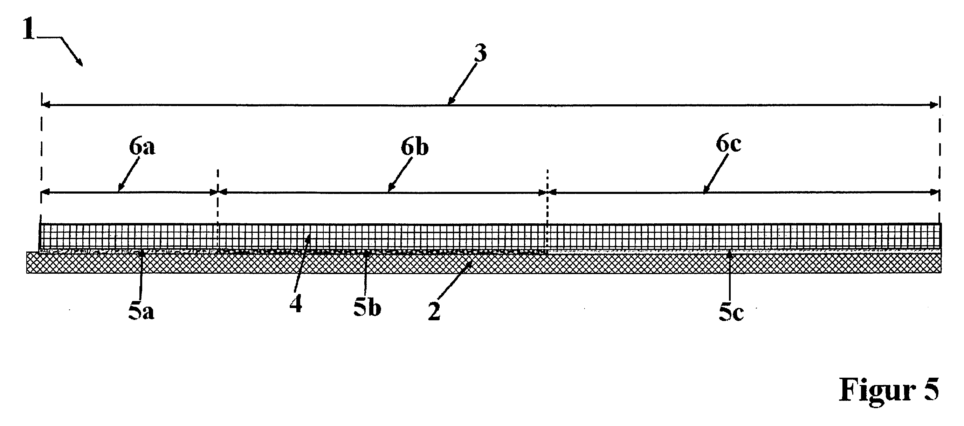

Die gleiche Elastizitätsabstufung über drei Flächenabschnitte 6a, 6b, 6c des Verstärkungsbereichs 3 kann gemäß einer weiteren, in der Schnittdarstellung aus Fig. 5 schematisch dargestellten Ausführungsform durch den Auftrag von Klebemitteln 5a, 5b, 5c verschiedener Dichte erreicht werden. Im steifsten, an den linken Rand des Verstärkungsbereichs 3 angrenzenden Flächenabschnitt 6a besteht die Kleberschicht 5a zwischen Oberstoff 2 und Unterstoff 4 aus einem Klebemittel mit hoher Dichte, während im aus Sicht von Fig. 5 an den rechten Rand des Verstärkungsbereichs 3 angrenzenden Flächenabschnitt 6c die Kleberschicht 5c aus einem Klebemittel mit niedrigerer Dichte besteht. Im mittleren Flächenabschnitt 6b ist das die Kleberschicht 5b bildende Klebemittel von einer Dichte, die zwischen den Klebemitteldichten der angrenzenden Flächenabschnitte 6a, 6c liegt. Der Verstärkungsbereich 3 ist demzufolge hier in Übereinstimmung mit Fig. 4 im linken Flächenabschnitt 6a am steifsten und im rechten Flächenabschnitt 6c am nachgiebigsten, wobei in dem mittleren Flächenabschnitt die Steifigkeit des Stoff zuschnitts 8 zwischen der der beiden angrenzenden Flächenabschnitte 6a, 6c liegt, so dass für einen annähernd kontinuierlichen Übergang der Elastizität im Verstärkungsbereich 3 des Stoffzuschnitts 8 gesorgt ist.

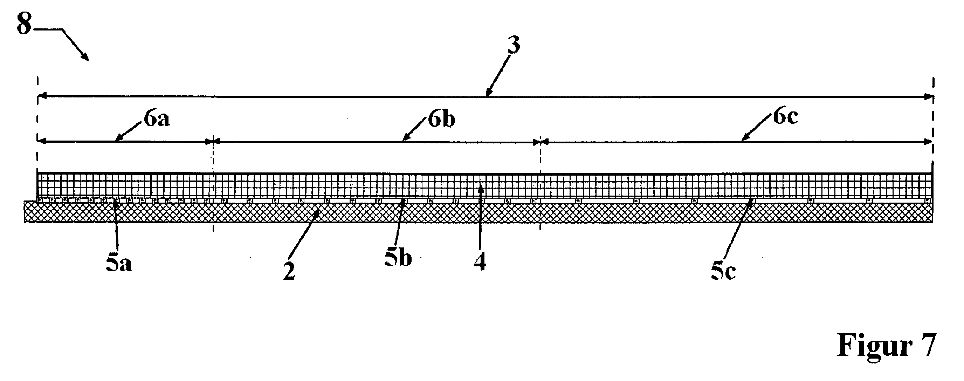

Eine besonders einfache Form, das Flächengewicht der Kleberschicht 5a, 5b, 5c zu steuern, ist mit den Fig. 6 und 7 dargestellt. Fig. 6 zeigt in Übereinstimmung zu Fig. 3 eine Gesamtschau des erfindungsgemäßen Stoffzuschnitts 8 für eine Miederhose in einer Draufsicht auf die Innenseite, d.h. auf die Seite, die später im Tragezustand auf der Körperhaut der Trägerin anliegt. Allerdings ist zwecks Sichtbarmachung der Kleberschicht 5a, 5b, 5c die Unterstoffabdeckung 4 entfernt worden, wobei aber in der zugehörigen Schnittdarstellung gemäß Fig. 7 entlang der Linie VII-VII aus Fig. 6 der Unterstoff 4 wieder mit dargestellt ist. Die Flächenabschnitte 6a, 6b, 6c mit unterschiedlichen Elastizitätseigenschaften sind zum besseren Vergleich entsprechend den Fig. 1 bis 5 dimensioniert, wobei die Variation des Flächengewichts der Kleberschicht 5a, 5b, 5c hier dadurch erreicht wurde, dass das Klebemittel jeweils mit unterschiedlichen Auftragsbildern 7a, 7b, 7c auf den Oberstoff 2 aufgetragen worden ist. Im aus Sicht von Fig. 6 an den oberen Rand des Stoffzuschnitts 8 angrenzenden Flächenabschnitt 6a des Verstärkungsbereichs 3 ist das Klebemittel 5a mit netzförmigem Auftragsbild 7a, d.h. mit sich senkrecht kreuzenden, gleich beabstandeten Klebelinien in Längsrichtung L und Querrichtung Q aufgetragen worden. Hier ist demzufolge das Flächengewicht der Kleberschicht 5a höher, genauer gesagt doppelt so hoch als im nach unten angrenzenden mittleren Flächenabschnitt 6b, wo das Klebemittel 5b nur bahnförmig, d.h. ausschließlich mit gleich beabstandeten Klebelinien in Querrichtung Q aufgetragen worden ist. Eine weitere deutliche Reduktion im Kleber-Flächengewicht ist in dem sich bogenförmig rechts an den mittleren Flächenabschnitt 6b angrenzenden Flächenabschnitt 6c des Verstärkungsbereichs 3 dadurch erreicht worden, dass das Klebemittel 5c hier nur noch in einem gleichmäßigen punkförmigen Raster 7c aufgetragen worden ist, wobei der Abstand der Klebepunkte noch größer gewählt ist als der Abstand der Klebelinien in den anderen beiden Flächenabschnitten 6a, 6b des Verstärkungsbereichs 3.

Nach einem bogenförmigen Schnitt entlang der Linie VII-Vil aus Fig. 6 erscheinen die drei beschriebenen Flächenabschnitte 6a, 6b, 6c mit unterschiedlichen Kleber-Flächengewichten in Fig. 7 nun nebeneinander von links nach rechts angeordnet. Die Variation des Flächengewichts der Kleberschicht 5a, 5b, 5c wird hier deutlich sichtbar durch die Anzahl bzw. den Abstand der geschnittenen Klebemittellinien bzw. -punkte. Im linken Flächenabschnitt 6a mit netzförmigem Klebemittelauftragsbild 7a werden mehr Klebemittellinien geschnitten als im mittleren und rechten Flächenabschnitt 6b, 6c. Hier ist das Flächengewicht der Kleberschicht 5a und folglich die Steifigkeit des Stoffzuschnitts 8 am höchsten. Im rechten Flächenabschnitt 6c werden nur ganz vereinzelt durch den erfolgten Schnitt entlang der Linie VII-VII aus Fig. 6 Klebemittelpunkte 5c getroffen. Der weitaus größte Anteil des Zwischenraums zwischen Oberstoff 2 und Unterstoff 4 ist aber klebemittelfrei, weshalb die Elastizität des Verbunds aus Oberstoff 2 und Unterstoff 4 hier kaum durch die Kleberschicht 5c herabgesetzt wird und demzufolge deutlich höher ist als in den beiden anderen Flächenabschnitten 6a, 6b.

Bildlich nicht dargestellt, aber natürlich auch vom Schutzumfang der vorliegenden Erfindung mitumfasst, sind Ausführungsformen, bei denen in einzelnen, vorzugsweise mittleren, d.h. von verklebten Flächenabschnitten 6a, 6b, 6c umgebenen Flächenabschnitten komplett auf eine Kleberschicht 5a, 5b, 5c verzichtet wird, so dass der Unterstoff 4 hier lose auf dem Oberstoff 2 aufliegt. Der Unterstoff 4 weist im Regelfall einen höheren Elastizitätsmodul als der Oberstoff 2 auf, so dass durch ein solch loses Aufeinanderliegen bereits eine Verstärkung des Oberstoffs 2 erzielt wird, welche durch die Kleberschicht 5a, 5b, 5c mit vorgeschilderter Variation ihres Flächengewichts noch stufenförmig weiter erhöht werden kann.

Um die Silhouette der Trägerin noch gezielter formen zu können, ist es vorteilhaft, wenn die Elastizitäten im Verstärkungsbereich 3 des Stoffzuschnitts 8 in Längsrichtung L und Querrichtung Q unterschiedlich hoch eingestellt sind, was beispielsweise dadurch zu realisieren ist, dass Oberstoff 2 und/oder Unterstoff 4 aus Stretch-Geweben bestehen, deren elastische Fasern dementsprechend vorzugsweise in Längs- und/oder Querrichtung L, Q eingewebt sind.

Eine Verschiebung der Elastizität in Längs- oder Querrichtung L, Q kann aber auch durch das Auftragsbild 7a, 7b, 7c der Kleberschicht 5a, 5b, 5c erreicht bzw. verstärkt werden. Im mittleren Flächenabschnitt 6b aus Fig. 6 mit bahnförmigem Klebemittelauftrag 7b wurde beispielsweise die Kleberschicht 5b so aufgetragen, dass das Klebemittel in zur Querrichtung Q parallelen Linien ausgerichtet ist. Die Elastizität des Stoffzuschnitts 8 wird in diesem mittleren Flächenabschnitt 6b unter der Voraussetzung, dass Oberstoff 2 und Unterstoff 4 in Längs- und Querrichtung L, Q gleich elastisch sind, in Längsrichtung L höher sein als in Querrichtung Q, da die Klebemittellinien 5b einer elastischen Dehnung in Längsrichtung L kaum Widerstand entgegen setzen, weil ihre Haupterstreckungsrichtung dazu senkrecht, also in Querrichtung Q verläuft.

Als Klebemittel werden bevorzugt thermoplastische Klebemittel verwendet, die sich mittels verschiedenster Auftragstechniken wie Walzenauftrag, Sprühauftrag etc. voll- oder, wie zu Fig. 6 geschildert, teilflächig auf das jeweilige Substrat aufbringen und danach aushärten lassen. Die Herstellung der stoffschlüssigen Verbindung von Oberstoff 2 und Unterstoff 4 kann auch mittels Ultraschallklebetechnik erfolgen, wobei hier das Klebemittel in Form eines Bandes zugeführt und mittels einer Ultraschallrollsonotrode in den Verbindungsstellen aktiviert wird.

## Patentansprüche

1. Stoffzuschnitt (8) für ein Kleidungsstück, umfassend einen Oberstoff (2), der in einem Verstärkungsbereich (3) mit einem Unterstoff (4) verbunden ist, wobei die Verbindung durch eine zwischen Oberstoff (2) und Unterstoff (4) angeordnete Kleberschicht (5a, 5b, 5c) gebildet ist und wobei der Stoffzuschnitt (8) in diesem Verstärkungsbereich (3) zumindest zwei Flächenabschnitte (6a, 6b, 6c) mit unterschiedlichen Elastizitätsmoduln aufweist, **dadurch gekennzeichnet, dass** im Flächenabschnitt (6a, 6b, 6c) mit höherem Elastizitätsmodul das Flächengewicht der Kleberschicht (5a, 5b, 5c) höher ist als im Flächenabschnitt (6a, 6b, 6c) mit niedrigerem Elastizitätsmodul.

2. Stoffzuschnitt nach Anspruch 1, **dadurch gekennzeichnet, dass** der Oberstoff (2) und/oder der Unterstoff (4) aus Stretch-Gewebe mit elastischen Faseranteilen gebildet sind.

3. Stoffzuschnitt nach Anspruch 1 oder 2, **dadurch gekennzeichnet, dass** die Kleberschicht (5a, 5b, 5c) zur Variation ihres Flächengewichts mit unterschiedlichen Schichtdicken (Ha, Hb, Hc) aufgetragen ist.

4. Stoffzuschnitt nach einem der Ansprüche 1 bis 3, **dadurch gekennzeichnet, dass** die Kleberschicht (5a, 5b, 5c) zur Variation ihres Flächengewichts aus Klebemitteln verschiedener Dichte besteht.

5. Stoffzuschnitt nach einem der Ansprüche 1 bis 4, **dadurch gekennzeichnet, dass** die Kleberschicht (5a, 5b, 5c) zur Variation ihres Flächengewichts mit unterschiedlichen Auftragsbildern (7a, 7b, 7c) aufgetragen ist.

6. Stoffzuschnitt nach Anspruch 5, **dadurch gekennzeichnet, dass** die Kleberschicht (5a, 5b, 5c) in zumindest einem Flächenabschnitt (6a, 6b, 6c) des Verstärkungsbereichs (3) mit vollflächigem Auftragsbild aufgetragen ist.

7. Stoffzuschnitt nach Anspruch 5 oder 6, **dadurch gekennzeichnet, dass** die Kleberschicht (5a) in zumindest einem Flächenabschnitt (6a) des Verstärkungsbereichs (3) mit netzförmigem Auftragsbild (7a) aufgetragen ist.

8. Stoffzuschnitt nach einem der Ansprüche 5 bis 7, **dadurch gekennzeichnet, dass** die Kleberschicht (5b) in zumindest einem Flächenabschnitt (6b) des Verstärkungsbereichs (3) mit bahnförmigem Auftragsbild (7b) aufgetragen ist.

9. Stoffzuschnitt nach einem der Ansprüche 5 bis 8, **dadurch gekennzeichnet, dass** die Kleberschicht (5c) in zumindest einem Flächenabschnitt (6c) des Verstärkungsbereichs (3) mit punktförmigem Auftragsbild (7c) aufgetragen ist.

10. Stoffzuschnitt nach einem der Ansprüche 1 bis 9, **dadurch gekennzeichnet, dass** im Verstärkungsbereich (3) zumindest ein Flächenabschnitt (6a, 6b, 6c) keine Kleberschicht (5a, 5b, 5c) enthält und der Unterstoff (4) hier lose auf dem Oberstoff (2) aufliegt.

11. Stoffzuschnitt nach einem der Ansprüche 1 bis 10, **dadurch gekennzeichnet, dass** zumindest in einem Flächenabschnitt (6a, 6b, 6c) des Verstärkungsbereichs (3) der Elastizitätsmodul in Längs- und Querrichtung (L, Q) verschieden ist.

12. Stoffzuschnitt nach Anspruch 11, **dadurch gekennzeichnet, dass** der Unterschied des Elastizitätsmoduls in Längs- und Querrichtung (L, Q) durch das Auftragsbild (7a, 7b, 7c) der Kleberschicht (5a, 5b, 5c) bedingt oder zumindest mitbedingt ist.

13. Stoffzuschnitt nach einem der Ansprüche 1 bis 12, **dadurch gekennzeichnet, dass** die Kleberschicht (5a, 5b, 5c) aus einem thermoplastischen Klebemittel besteht.

14. Stoffzuschnitt nach einem der Ansprüche 1 bis 13, **dadurch gekennzeichnet, dass** die Kleberschicht (5a, 5b, 5c) aus einem mittels Ultraschall aushärtbaren Klebemittel besteht.

15. Stoffzuschnitt nach einem der Ansprüche 1 bis 14, **dadurch gekennzeichnet, dass** der Oberstoff (2) und der Unterstoff (4) zusätzlich durch Nähte miteinander verbunden sind.

16. Stoffzuschnitt nach einem der Ansprüche 1 bis 15, **dadurch gekennzeichnet, dass** der Unterstoff (4) einen höheren Elastizitätsmodul aufweist als der Oberstoff (2).

17. Stoffzuschnitt nach einem der Ansprüche 1 bis 16, **dadurch gekennzeichnet, dass** der Oberstoff (2) und/oder der Unterstoff (4) aus mehreren miteinander verbundenen Stofflagen bestehen.

18. Kleidungsstück, insbesondere Unterwäschestück wie Miederhose, Miederbody, Slip, Panty, Büstenhalter oder dergleichen, welches einen Stoffzuschnitt (8) gemäß einem der vorhergehenden Ansprüche umfasst.
